# FASCICULE DE BREVET EUROPEEN

(11) **EP 2 755 874 B1**
(45) Date de publication et mention de la délivrance du brevet: **19.06.2019**
(21) Numéro de dépôt: 12743748.1
(22) Date de dépôt: 08.08.2012
(51) Int. Cl.: B60S 1/38

(54) **ENSEMBLE DE CONNEXION POUR SYSTEME D'ESSUYAGE D'UN VEHICULE AUTOMOBILE**
VERBINDUNGSANORDNUNG FÜR EINE SCHEIBENWISCHANLAGE EINES KRAFTFAHRZEUGS
CONNECTION ASSEMBLY FOR A WIPING SYSTEM OF A MOTOR VEHICLE

(30) Priorité: 12.09.2011 FR 1158091
(43) Date de publication de la demande: 23.07.2014
(73) Titulaire: Valeo Systèmes d'Essuyage, 78321 Le Mesnil Saint Denis (FR)
(72) Inventeur: HOUSSAT, Stéphane, F-63112 Blanzat (FR); ROUSSEL, Loic, F-63270 Isserteaux (FR); TERRASSE, William, F-63270 Vic Le Comte (FR)
(74) Mandataire: Callu-Danseux, Violaine
(86) Numéro de dépôt international: PCT/EP2012/065528
(87) Numéro de publication internationale: WO 2013/037572

(56) Documents cités:
- DE-A1-102008 000 933
- DE-A1-102009 029 458
- FR-A1- 2 847 221

## Description

La présente invention concerne un ensemble pour système d'essuyage.

Quoique non exclusivement, ce type de système d'essuyage est destiné à équiper un véhicule automobile, pour y permettre notamment l'essuyage des vitres.

Les automobiles sont couramment équipées de systèmes d'essuie-glace pour assurer un lavage du pare-brise et éviter que la vision qu'a le conducteur de son environnement soit perturbée. Ces essuie-glaces sont classiquement entraînés par un porte-balai effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur.

Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur.

Dans chacune de ces deux versions, le balai est rattaché au porte-balai tournant de l'essuie-glace :
- d'une part, par une pièce terminale qui prolonge le porte-balai à son extrémité supérieure, et
- d'autre part, par un connecteur mécanique solidaire du balai (sertie sur le palonnier ou directement sur le balai plat) et comportant notamment des moyens d'articulation avec la pièce terminale comme divulgué par la publication FR 2 847 221 ou par un ensemble comprenant le connecteur ainsi qu'un adaptateur, pièce intermédiaire qui permet de fixer le connecteur mécanique à la pièce terminale, donc au porte-balai.

Pour assurer le logement - au moins partiel - du connecteur mécanique à l'intérieur de l'adaptateur, il est déjà connu d'équiper, d'une part, ledit adaptateur de deux parois latérales déformables présentant chacune un orifice latéral, et, d'autre part, ledit connecteur mécanique de deux pions. Chaque pion du connecteur mécanique est associé à un orifice latéral de l'adaptateur. Ainsi, chaque pion est apte à être inséré dans l'orifice latéral correspondant de l'adaptateur, suivant une direction d'insertion prédéterminée. DE 10 2008 000 933 A1 divulgue un ensemble pour système d'essuyage selon le préambule de la revendication 1.

Les documents US 7,669,276 et US 7,621,016 divulguent des ensembles pour système d'essuyage, dans lesquels l'adaptateur et le connecteur mécanique sont respectivement pourvus d'orifices latéraux et de pions pour permettre le logement dudit connecteur mécanique dans ledit adaptateur.

Plus précisément, dans ces deux documents, les deux orifices latéraux, ménagés en regard l'un de l'autre dans les deux parois latérales de l'adaptateur, et les deux pions présentent chacun une section de forme circulaire. De plus, la portion de chaque paroi latérale, par laquelle le pion correspondant est destiné à passer lorsque celui-ci est inséré dans l'orifice latéral correspondant, est un prolongement de l'orifice latéral jusqu'à l'extrémité de la paroi latérale. Ainsi, le pion peut être inséré jusque dans l'orifice latéral correspondant par glissement dudit bouton le long du prolongement de cet orifice latéral.

Toutefois, un tel prolongement de l'orifice latéral rend instable la connexion entre ledit orifice latéral et le pion correspondant.

Aussi, il est souhaitable que chaque paroi latérale de l'adaptateur ne présente pas de tels prolongements mais qu'au contraire, les orifices latéraux soient fermés, afin que le pion correspondant y soit solidarisé de façon stable.

Dans ce cas, la connexion de l'adaptateur au connecteur mécanique impose que les pions soient parfaitement disposés suivant la direction d'insertion prédéterminée, ce qui nécessite d'éviter toute translation de l'adaptateur par rapport au connecteur mécanique, de même que toute rotation dudit adaptateur par rapport audit connecteur mécanique. Or, de telles précautions sont susceptibles d'être difficiles à réaliser dans le cas d'un montage automatisé du système essuie-glace. Ces précautions compliquent également le montage du balai porteur du connecteur sur le porte-balai porteur de l'adaptateur pour un utilisateur souhaitant remplacer ces balais usés, de tels contraintes allant à l'encontre de l'ergonomie qui doit être offerte à cet utilisateur.

L'objet de la présente invention est de remédier à ces inconvénients en proposant d'éviter toute translation et toute rotation de l'adaptateur par rapport au connecteur mécanique lors de leur connexion, les excroissances cylindriques pouvant être facilement guidées et alignées jusque dans les orifices latéraux correspondants.

A cette fin, l'invention vise un ensemble pour système d'essuyage selon la revendication 1, et un système d'essuyage selon la revendication 9.

Ainsi, grâce à la présente invention, les différentes inclinaisons pratiquées dans la cavité ménagée dans chaque paroi latérale, au niveau de la portion de celle-ci sur laquelle l'excroissance cylindrique correspondante est destinée à s'appuyer lors de son insertion, permettent de guider et aligner ladite excroissance cylindrique jusque dans l'orifice latéral. En particulier, il peut être admis une translation du connecteur mécanique par rapport à l'adaptateur du fait, d'une part, du jeu créé par le ménagement des orifices latéraux et, d'autre part, de l'inclinaison des délimitations latérales des cavités (translation perpendiculaire à la direction d'insertion et à l'axe des orifices latéraux) ainsi que de l'inclinaison de la surface interne des cavités (translation suivant l'axe des orifices latéraux). En outre, il peut être admis une rotation du connecteur mécanique par rapport à l'adaptateur du fait de l'inclinaison précitée de la surface interne des cavités et de l'inclinaison des extrémités des excroissances cylindriques.

De cette manière, chaque excroissance cylindrique peut être facilement guidée vers l'orifice latéral correspondant, même en présence d'un défaut de translation et/ou de rotation du connecteur mécanique par rapport à l'adaptateur. De plus, chaque orifice latéral peut être entièrement fermé, pour une plus grande stabilité et sécurité de la connexion entre le connecteur mécanique et l'adaptateur.

Selon l'invention, la cavité comprend des délimitations latérales inclinées par rapport au plan formé par l'axe dudit orifice latéral correspondant et de ladite direction d'insertion, de façon décroissante depuis l'extrémité de ladite paroi latérale jusqu'audit orifice latéral correspondant.

De préférence, les orifices latéraux de l'adaptateur sont disposés en regard l'un de l'autre, suivant un axe commun.

De même, les excroissances cylindriques du connecteur mécanique sont disposées préférentiellement en regard l'une de l'autre, suivant un axe commun parallèle, et avantageusement confondu, à l'axe commun des orifices latéraux de l'adaptateur.

Selon une forme particulière de réalisation des excroissances cylindriques du connecteur mécanique et des orifices latéraux de l'adaptateur, ceux-ci présentent chacun une section de forme circulaire.

Avantageusement, la surface interne inclinée de la cavité ménagée dans chaque paroi latérale, ainsi que des délimitations latérales de ladite cavité, sont symétriques par rapport à un plan passant par l'axe de l'orifice latéral correspondant et de la direction d'insertion desdits excroissances cylindriques.

Avantageusement encore, le connecteur mécanique comprend une partie centrale de laquelle débouchent deux excroissances cylindriques, un épaulement cylindrique étant intercalé entre la partie centrale et chaque excroissance cylindrique.

Selon un exemple de réalisation, le caractère déformable d'au moins une paroi latérale résulte d'au moins une gorge ménagée dans l'épaisseur de la paroi latérale.

On notera tout particulièrement que l'adaptateur comprend au moins deux organes de verrouillage, chacun constitué d'un bouton escamotable ménagé à une extrémité d'une languette flexible, pour verrouiller l'adaptateur vis-à-vis de la pièce terminale, lesdites languettes étant agencées de manière à s'entrecroiser lors de la manipulation des boutons escamotables.

La présente invention concerne également un système d'essuyage comprenant un balai, un porte-balai se prolongeant à son extrémité extérieure par une pièce terminale, ainsi qu'un ensemble comprenant un connecteur mécanique solidaire dudit balai et un adaptateur apte à être relié à ladite pièce terminale et audit connecteur mécanique, ledit adaptateur comprenant deux parois latérales déformables présentant chacune un orifice latéral, ledit connecteur mécanique comprenant deux excroissances cylindriques par l'intermédiaire desquelles ledit connecteur mécanique est apte à être au moins partiellement logé à l'intérieur dudit adaptateur, chaque excroissance cylindrique étant apte à être insérée dans l'orifice latéral correspondant suivant une direction d'insertion prédéterminée, par déformation de la paroi latérale correspondante, remarquable en ce que :
caractérisé en ce que :
- l'extrémité de chaque excroissance cylindrique présente au moins au moins une portion inclinée par rapport à ladite direction d'insertion, vers l'intérieur dudit adaptateur, et
- la portion de chaque paroi latérale, sur laquelle l'excroissance cylindrique correspondante est destinée à s'appuyer lorsque celle-ci est insérée dans l'orifice latéral correspondant, présente une cavité dont au moins une partie de la surface interne est inclinée de façon croissante depuis l'extrémité de ladite paroi latérale jusqu'audit orifice latéral correspondant, et dont au moins une partie des délimitations latérales sont inclinées par rapport au plan formé par l'axe dudit orifice latéral correspondant et de ladite direction d'insertion, de façon décroissante depuis l'extrémité de ladite paroi latérale jusqu'audit orifice latéral correspondant.

Les figures du dessin annexé feront bien comprendre comment l'invention peut être réalisée. Sur ces figures, des références identiques désignent des éléments techniques semblables.
La figure 1 est une vue schématique en perspective d'un système d'essuyage conforme à l'art antérieur.
La figure 2 est une vue schématique agrandie, en perspective, de la portion d'un système d'essuyage conforme à la présente invention, au niveau de laquelle sont assemblés le connecteur mécanique, l'adaptateur et la pièce terminale.
La figure 3 est une vue schématique semblable à celle de la figure 2, qui illustre l'assemblage du connecteur mécanique à la pièce terminale.
Les figures 4 et 5 sont deux vues schématiques, suivant deux orientations différentes, de l'adaptateur de la figure 2.
Les figures 6 et 7 sont deux vues schématiques, suivant deux orientations différentes, du connecteur mécanique des figures 2 et 3.

Dans la suite de la description, les dénominations longitudinales ou latérales se réfèrent à l'orientation du porte-balai sur lequel est monté le balai d'essuie-glace. La direction longitudinale correspond à l'axe principal du porte-balai alors que les orientations latérales correspondent à des orientations perpendiculaires à l'axe du porte-balai dans son plan de rotation. Pour les directions longitudinales, les dénominations extérieure ou intérieure s'apprécient par rapport au centre de rotation du porte-balai de l'essuie-glace. Par ailleurs, les directions référencées comme supérieures ou inférieures correspondent à des orientations perpendiculaires au plan de rotation du porte-balai.

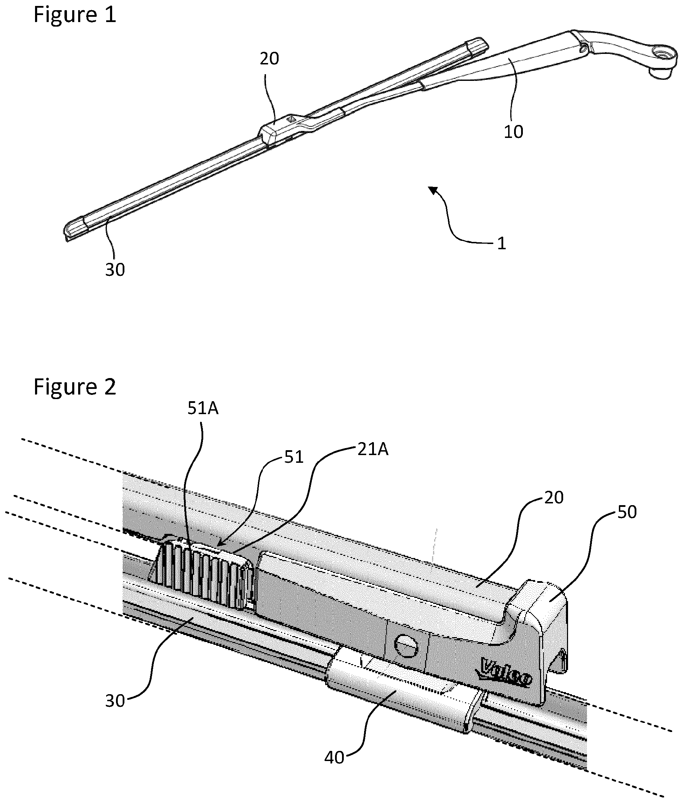

En se référant aux figures 1 à 3, on voit un essuie-glace 1 comprenant classiquement un porte-balai 10 se prolongeant à son extrémité extérieure par une pièce terminale 20, qui est fixée, du côté intérieur, par un sertissage sur ledit porte-balai 10. L'ensemble selon l'invention est formé par un adaptateur 50 et un connecteur mécanique 40. La pièce terminale 20 se loge dans un volume interne de l'adaptateur 50 et recouvre le connecteur mécanique 40, par l'intermédiaire duquel ledit adaptateur 50 porte le balai 30.

Sur la figure 2, on constate que la pièce terminale 20 est destinée à être insérée dans l'adaptateur 50 par un mouvement de translation selon un axe longitudinal, pour venir dans la position d'utilisation, où il est positionné en butée contre une forme conférée à la pièce terminale 20, avec laquelle il est destiné à coopérer. L'adaptateur 50 y est alors fixé de façon réversible au moyen de deux organes de verrouillage 51 et 52, comprenant des boutons escamotables 51A et 52A qui coopèrent chacun avec un évidement pratiqué à cet effet dans des branches latérales de la pièce terminale 20.

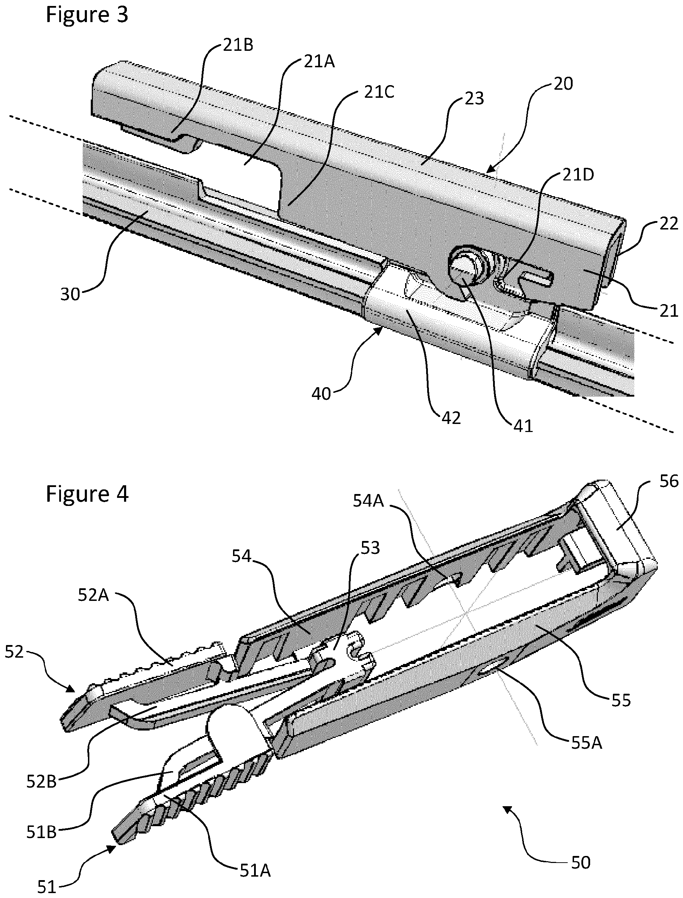

Comme représentée sur la figure 3, la pièce terminale 20 présente, du côté extérieur, une forme en « U » renversé comprenant les deux branches latérales 21 et 22 s'étendant en direction du vitrage, ainsi qu'une base 23 dans sa partie supérieure. Sur les deux branches latérales 21 et 22 sont pratiqués deux orifices ou évidements (21A pour la branche 21) dans lesquels les boutons escamotables 51A et 52A des organes de verrouillage 51 et 52 de l'adaptateur 50 sont aptes à venir se loger. Chacune des branches latérales 21 et 22 présente par ailleurs deux butées en translation (21B et 21C pour la branche 21) vis-à-vis des boutons escamotables 51A et 52A de sorte à bloquer selon deux sens opposés toute translation de l'adaptateur 50 vis-à-vis du porte-balai. En outre, chacune des branches latérales 21 et 22 présente, du côté opposé aux orifices (21A pour la branche 21) de réception de organes de verrouillage 51 et 52, un orifice ou évidement (21D pour la branche 21) au niveau duquel la pièce terminale est directement reliée au connecteur mécanique 40, ce dernier comprenant à cet effet deux boutons (dont seul l'un d'eux, désigné par la référence 41, est représenté sur la figure 3) de forme complémentaire desdits orifices (21D pour la branche 21). Ainsi, la pièce terminale 20 est fixé, d'un côté, à l'adaptateur 50, et, de l'autre côté, au connecteur 40, ce qui assure la solidité mécanique de l'assemblage formant le système d'essuie-glace selon l'invention. Plus généralement, ces excroissances sont de section circulaire et débouchent du connecteur mécanique 40.

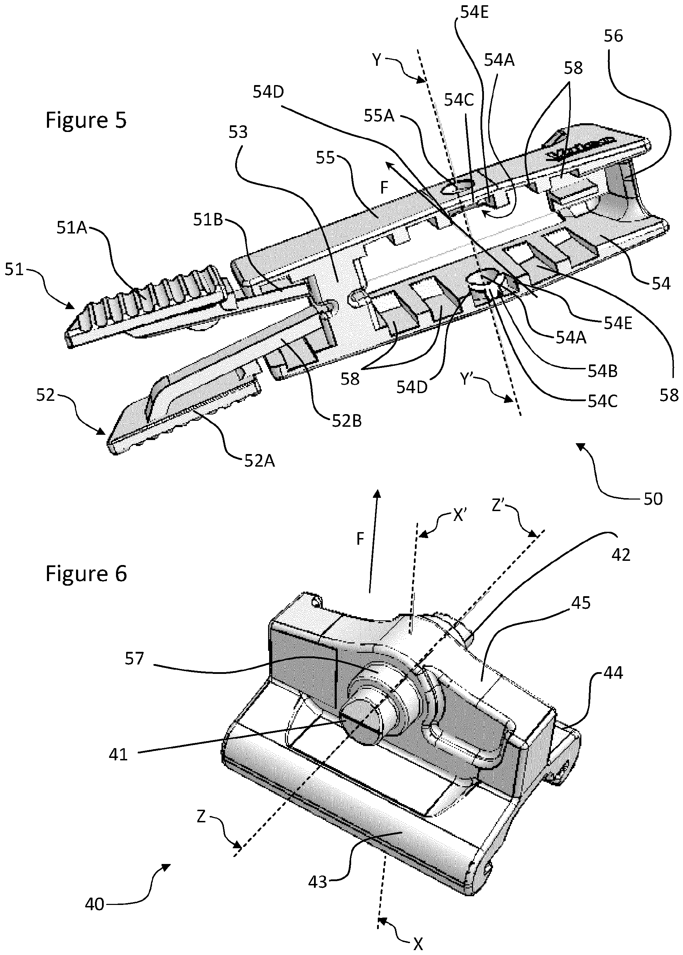

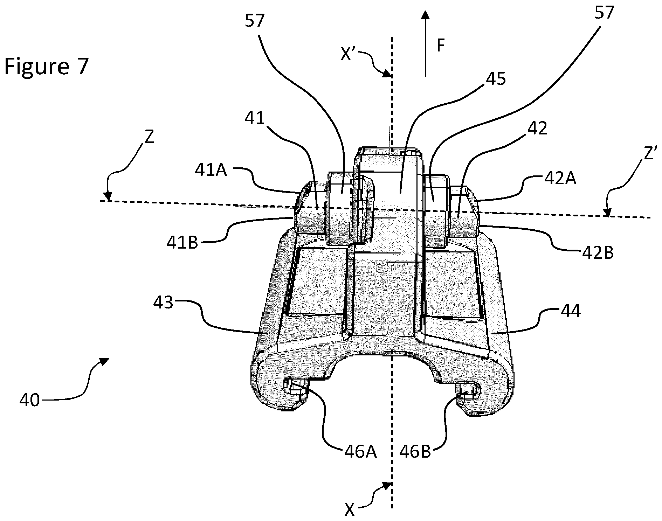

Le connecteur mécanique 40 est solidarisé de manière indémontable sur le balai 30, par l'intermédiaire de deux épaulements 46A et 46B disposés dans sa partie inférieure (figure 7), de façon à assurer ainsi la transmission de l'effort mécanique en provenance du porte-balai 10 vers le balai 30. Ce connecteur mécanique 40 est également pourvue d'une partie centrale 45, entourée de part et d'autre, dans sa partie inférieure, par deux flancs latéraux 43 et 44 s'étendent par exemple perpendiculairement à un plan de symétrie de la partie centrale 45 (figure 6).

En se référant maintenant aux figures 4 et 5, on voit le détail de l'adaptateur 50. L'adaptateur 50 présente une forme en chape, complémentaire au volume externe de la pièce terminale 20, cette dernière venant se loger dans un volume interne délimité par l'adaptateur 50. Deux parois latérales 54 et 55 sont jointes par un pont 56.

L'adaptateur 50 comporte par ailleurs deux organes de verrouillage 51 et 52, présentant respectivement la forme de boutons escamotables 51A et 52A fixés en extrémités de languettes flexibles 51B et 52B. Ces organes de verrouillage 51 et 52 sont destinés à permettre la fixation de l'adaptateur 50 vis-à-vis de la pièce terminale 20 en coopérant respectivement avec des évidements (dont l'évidement 21A) pratiqués dans les branches latérales 21 et 22 de la pièce terminale 20 (figure 3).

Les deux organes de verrouillage 51 et 52 sont disposés en regard l'un de l'autre. La notion de « en regard de » signifie qu'au moins une portion d'un premier organe de verrouillage 51 est située dans le prolongement d'une portion d'un deuxième organe de verrouillage 52. Autrement dit, l'invention couvre le cas où les deux organes de verrouillage sont décalés l'un par rapport à l'autre dans la direction longitudinale.

Selon un mode de réalisation préféré, les deux organes de verrouillage 51 et 52 sont disposés en regard l'un de l'autre et de façon opposé par rapport à un axe longitudinal de l'adaptateur 50. Avantageusement, les boutons escamotables 51A et 52A sont ainsi l'un en face de l'autre.

Les organes de verrouillage 51 et 52 sont disposés de manière que leurs languettes flexibles respectives 51B et 52B, ainsi que leurs boutons escamotables 51A et 52A, se rapprochent l'un de l'autre lorsque l'adaptateur 50 est en train d'être inséré sur la pièce terminale 20. Ainsi, par un simple pincement des deux boutons escamotables 51A et 52A, les deux organes de verrouillage 51 et 52, initialement disposés dans une position nominale dans laquelle la pièce terminale 20 n'est pas insérée, peuvent être rapprochés afin de permettre le passage des évidements (dont l'évidement 21A). Puis, lorsque ces évidements (dont l'évidement 21A) sont disposés de façon complémentaire vis-à-vis des deux boutons escamotables 51A et 52A, les deux boutons escamotables 51A et 52A peuvent être relâchés pour permettre le blocage de la pièce terminale 20 à l'intérieur de l'adaptateur 50.

Ainsi, les languettes flexibles 51B et 52B se déforment dans un plan, appelé plan de flexion, et sont agencées l'une par rapport à l'autre de sorte que le plan de flexion de la première languette flexible est distinct de celui de la deuxième languette flexible, ces plans de flexion pouvant par ailleurs être parallèle entre eux. On notera que les languettes flexibles sont reliées l'une à l'autre par une articulation 53 qui présente une section en forme de « H », un axe de flexion des languettes passant par l'articulation 53.

Conformément à la présente invention, les parois latérales 54 et 55 de l'adaptateur 50 sont déformables et pourvues respectivement de deux orifices latéraux 54A et 55A présentant un axe Y-Y' commun (figure 5). Ces orifices latéraux 54A et 55A sont destinés à permettre la fixation de l'adaptateur 50 au connecteur mécanique 40 et à servir d'axe de rotation entre le balai 30 et le porte-balai 10 quand le système d'essuyage est assemblé. Ainsi, le balai 30 présente au moins un degré de liberté en rotation par rapport au porte-balai 10, en particulier par rapport à la pièce terminale 20, afin de permettre audit balai 30 de suivre la courbure du vitrage à essuyer. En pratique, chaque orifice latéral est un trou cylindrique ménagé au travers de la paroi latéral de l'adaptateur. Selon une autre variante, cet orifice peut être borgne, en ce sens qu'il ne traverse pas l'intégralité de la paroi latérale de l'adaptateur.

Les parois latérales 54 et 55 s'étendent entre le pont 56 et l'articulation 53 et présente une face externe lisse ainsi qu'une face interne dans laquelle sont ménagés des gorges 58 réduisant localement l'épaisseur de la paroi latérale. Un tel arrangement est un exemple de réalisation du caractère déformable de ces parois mais l'invention couvre tous autres solutions permettant la paroi de se déformer au passage du connecteur mécanique 40, puis de reprendre se position de repos.

En se référant maintenant aux figures 6 et 7, le connecteur mécanique 40 comprend deux excroissances cylindriques 41 et 42 par l'intermédiaire desquelles celui-ci est apte à être au moins partiellement logé et solidarisé à l'intérieur de l'adaptateur 50. Plus précisément, chacune de ces excroissances cylindriques 41 et 42 fait saillie de part et d'autre de la partie centrale 45 du connecteur mécanique 40, les deux excroissances cylindriques 41 et 42 étant opposées l'une à l'autre et disposées suivant un axe commun Z-Z'. La forme et les dimensions de ces excroissances cylindriques 41 et 42 sont telles que celles-ci sont aptes à être insérées respectivement dans les orifices latéraux correspondants 54A et 55A, suivant une même direction d'insertion F prédéterminée, correspondant à un axe d'insertion X-X', comme représenté sur les figures 6 et 7.

Selon un exemple de réalisation, on constate la présence d'un épaulement cylindrique 57 intercalé entre la partie centrale 45 et chaque excroissance cylindrique 41 et/ou 42. Cet épaulement cylindrique 57 est destiné à coopérer avec l'évidement 21D pratiqué dans les branches latérales 21 et/ou 22 de la pièce terminale 20. Il est ainsi possible de séparer les fonctions, l'épaulement cylindrique 57 étant voué à autoriser une rotation du balai par rapport au porte-balai quand le système d'essuyage est en fonctionnement, alors que les excroissances cylindrique 41 et 42 sont vouées à réaliser le maintien mécanique entre le connecteur mécanique 40 et l'adaptateur 50. On notera enfin que, selon un exemple de réalisation, le diamètre extérieur de l'épaulement cylindrique 57 est supérieur au diamètre extérieur de l'excroissance cylindrique issue de l'épaulement cylindrique concerné.

Ainsi, le connecteur mécanique 40 peut être inséré dans l'adaptateur 50, suivant la direction d'insertion F, les excroissances cylindriques 41 et 42 engendrant alors la déformation des parois latérales 54 et 55 jusqu'à ce que celles-ci soit logées dans les orifices latéraux 54A et 55A, les parois latérales 54 et 55 reprenant alors leur forme nominale, ci-dessus appelée position de repos, puisque les excroissances cylindriques 41 et 42 n'appuient plus sur elles, de sorte que lesdits excroissances cylindriques sont parfaitement bloquées dans lesdits orifices.

Conformément à la présente invention, l'extrémité de chacune des excroissances cylindriques 41 et 42 présente au moins une portion inclinée, ou pan incliné, référencé 41A et 42A dans la partie supérieure de cette extrémité, par rapport à ladite direction d'insertion F, vers l'intérieur de l'adaptateur 50. L'autre portion de cette extrémité (41B et 42B) peut rester plane, parallèle à la direction d'insertion F. Ce pan incliné est réalisé au niveau de la face extrémale du bouton, c'est-à-dire celle qui vient en appui contre les parois latérales de l'adaptateur 50 lors de l'insertion du connecteur mécanique 40 dans l'adaptateur 50. La direction d'inclinaison de ce pan incliné 41A ou 42A est telle que le plan qui passe par ce pan incliné croise la direction X-X' au dessus de la partie centrale 45.

De plus, la portion (figure 5) de chaque paroi latérale 54, 55, sur laquelle l'excroissance cylindrique correspondante 41, 42 est destinée à s'appuyer lorsque celle-ci est insérée dans l'orifice latéral correspondant 54A, 55A, présente une cavité 54A, 54B. Ces cavités 54A et 54B sont ménagées dans l'épaisseur de la paroi latérale concernée, à une distance sensiblement équivalente du pont 56 et de l'articulation 53. Ces cavités 54A et 54B présentent chacune une surface interne 54C et deux délimitations ou tranches latérales 54D et 54E formées par l'épaisseur de la paroi latéral 54, 55 qui reçoit ladite cavité 54A et 54B.

Conformément à la présente invention, au moins une partie de cette surface interne 54C, et avantageusement l'intégralité de cette surface interne 54C est inclinée de façon croissante depuis l'extrémité de ladite paroi latérale 54, 55 jusqu'à l'orifice latéral correspondant 54A, 55A. Autrement dit, la surface interne 54C s'inscrit dans un plan qui croise la direction d'insertion F au dessus de l'adaptateur 50, c'est-à-dire du côté opposé à la surface vitrée par rapport à l'adaptateur 50.

Par ailleurs, au moins une partie des délimitations latérales 54D et 54E sont inclinées par rapport au plan formé par l'axe de l'orifice latéral correspondant et de la direction d'insertion F, de façon décroissante depuis l'extrémité de ladite paroi latérale 54 jusqu'à l'orifice latéral correspondant 54A. Autrement dit, les deux délimitations latérales 54D et 54E affectées à une cavité s'inscrive dans un cône dont la pointe virtuelle est placée au dessus de l'adaptateur, selon la définition indiquée plus haut.

Ainsi, grâce à ces inclinaisons des cavités précitées et à l'inclinaison ménagée au bout des excroissances cylindriques, les excroissances cylindriques 41 et 42 du connecteur mécanique 40 peuvent être guidées vers les orifices latéraux 54A et 55A correspondants de l'adaptateur 50, même lorsque ledit connecteur mécanique est inséré en travers dans ledit adaptateur 50, autrement dit en étant initialement translaté ou tourné par rapport à la direction d'insertion F, suivant l'axe d'insertion X-X'.

Par ailleurs, afin de guider d'autant mieux le connecteur mécanique 40 lors de son insertion dans l'adaptateur 50, il peut être prévu que la surface interne 54C de la cavité ménagée dans chaque paroi latérale, de même que les délimitations latérales 54D et 54E de chaque cavité, sont symétriques par rapport au plan formé par l'axe de l'orifice latéral correspondant 54A ou 55A et de la direction d'insertion F desdites excroissances cylindriques 41 et 42.

En outre, on constate que le pan incliné 41A et 42A de chaque excroissance cylindrique 41 ou 42 est orienté selon un angle similaire, et avantageusement identique, à l'angle formé par le plan passant par la surface interne 54C.

## Revendications

1. Ensemble (40, 50) pour système d'essuyage (1), ledit système d'essuyage (1) comprenant un balai (30) et un porte-balai (10) se prolongeant par une pièce terminale (20), ledit ensemble (40, 50) comprenant un connecteur mécanique (40) solidaire dudit balai (30) et un adaptateur (50) apte à être relié à ladite pièce terminale (20) et audit connecteur mécanique (40), ledit adaptateur (50) comprenant deux parois latérales déformables (54, 55) présentant chacune un orifice latéral (54A, 55A), ledit connecteur mécanique (40) comprenant deux excroissances cylindriques (41, 42) par l'intermédiaire desquelles ledit connecteur mécanique (40) est apte à être au moins partiellement logé à l'intérieur dudit adaptateur (50) selon une direction d'insertion (F),
- l'extrémité (41A-B, 42A-B) d'au moins une excroissance cylindrique (41, 42) présentant au moins une portion inclinée (41A, 42A) par rapport à ladite direction d'insertion (F), et
- au moins une paroi latérale (54) présentant une cavité (54B) comprenant une surface interne (54C) inclinée de façon croissante depuis une extrémité de ladite paroi latérale (54) jusqu'audit orifice latéral correspondant (54A, 55A) ledit ensemble étant **caractérisé en ce que**
la cavité (54B) comprend des délimitations latérales (54D, 54E) inclinées par rapport au plan formé par l'axe dudit orifice latéral correspondant (54A, 55A) et de ladite direction d'insertion (F), de façon décroissante depuis l'extrémité de ladite paroi latérale (54) jusqu'audit orifice latéral correspondant (54A, 55A).

2. Ensemble selon les revendications 1, dans lequel les orifices latéraux (54A, 55A) de l'adaptateur (50) sont disposés en regard l'un de l'autre, suivant un axe commun (Y-Y').

3. Ensemble selon la revendication 2, dans lequel les excroissances cylindriques (41, 42) du connecteur mécanique (40) sont disposées en regard l'une de l'autre, suivant un axe commun (Z-Z') parallèle à l'axe commun (Y-Y') des orifices latéraux (54A, 55A) de l'adaptateur (50).

4. Ensemble selon l'une des revendications 1 à 3, dans lequel les excroissances cylindriques (41, 42) du connecteur mécanique (40) et les orifices latéraux (54A, 55A) de l'adaptateur (50) présentent chacun une section de forme circulaire.

5. Ensemble selon l'une des revendications précédentes, dans lequel la surface interne inclinée (54C) de la cavité (54B) ménagée dans chaque paroi latérale (54A, 55A), ainsi que des délimitations latérales (54D, 54E) de ladite cavité (54B), sont symétriques par rapport à un plan passant par l'axe de l'orifice latéral correspondant (54A) et de la direction d'insertion (F) desdits excroissances cylindriques (41, 42).

6. Ensemble selon l'une quelconque des revendications précédentes, dans lequel le connecteur mécanique (40) comprend une partie centrale (45) de laquelle débouchent deux excroissances cylindriques (41, 42), un épaulement cylindrique (57) étant intercalé entre la partie centrale (45) et chaque excroissance cylindrique (41, 42).

7. Ensemble selon l'une quelconque des revendications précédentes, dans lequel le caractère déformable d'au moins une paroi latérale (54, 55) résulte d'au moins une gorge (58) ménagée dans l'épaisseur de la paroi latérale (54, 55).

8. Ensemble selon l'une quelconque des revendications précédentes, dans lequel l'adaptateur (50) comprend au moins deux organes de verrouillage (51, 52), chacun constitué d'un bouton escamotable (51A, 52A) ménagé à une extrémité d'une languette flexible (51B, 52B), pour verrouiller l'adaptateur (50) vis-à-vis de la pièce terminale (20), lesdites languettes (51B, 52B) étant agencées de manière à s'entrecroiser lors de la manipulation des boutons escamotables (51A, 52A).

9. Système d'essuyage (1) comprenant un balai (30), un porte-balai (10) se prolongeant à son extrémité extérieure par une pièce terminale (20), ainsi qu'un ensemble (40, 50) comprenant un connecteur mécanique (40) solidaire dudit balai (30) et un adaptateur (50) apte à être relié à ladite pièce terminale (20) et audit connecteur mécanique (40), ledit adaptateur (50) comprenant deux parois latérales déformables (54, 55) présentant chacune un orifice latéral (54A, 55A), ledit connecteur mécanique (40) comprenant deux excroissances cylindriques (41, 42) par l'intermédiaire desquelles ledit connecteur mécanique (40) est apte à être au moins partiellement logé à l'intérieur dudit adaptateur (50), chaque excroissance cylindrique (41, 42) étant apte à être insérée dans l'orifice latéral correspondant (54A, 55A) suivant une direction d'insertion (F) prédéterminée, par déformation de la paroi latérale correspondante (54, 55),
- l'extrémité (41A-B, 42A-B) de chaque excroissance cylindrique (41, 42) présentant au moins au moins une portion inclinée (41A, 42A) par rapport à ladite direction d'insertion (F), vers l'intérieur dudit adaptateur (50), et
- la portion (54B) de chaque paroi latérale (54), sur laquelle l'excroissance cylindrique correspondant (41) est destiné à s'appuyer lorsque celui-ci est inséré dans l'orifice latéral correspondant (54A), présentant une cavité
(54B) dont au moins une surface interne (54C) est inclinée de façon croissante depuis l'extrémité de ladite paroi latérale (54) jusqu'audit orifice latéral correspondant (54A), **caractérisé en ce qu'** au moins une délimitation
latérale (54D, 54E) est inclinée par rapport au plan formé par l'axe dudit orifice latéral correspondant (54A) et de ladite direction d'insertion (F), de façon décroissante depuis l'extrémité de ladite paroi latérale (54) jusqu'audit orifice latéral correspondant (54A).

## Patentansprüche

1. Anordnung (40, 50) für Scheibenwischanlage (1), wobei die Scheibenwischanlage (1) ein Blatt (30) und einen Blattträger (10), der sich durch ein Endteil (20) verlängert, umfasst, wobei die Anordnung (40, 50) einen mechanischen Steckverbinder (40), der fest mit dem Blatt (30) verbunden ist, und einen Adapter (50), der geeignet ist, um mit dem Endteil (20) und mit dem mechanischen Steckverbinder (40) verbunden zu sein, umfasst, wobei der Adapter (50) zwei verformbare Seitenwände (54, 55) umfasst, die jeweils eine seitliche Öffnung (54A, 55A) aufweisen, wobei der mechanische Steckverbinder (40) zwei zylindrische Ausstülpungen (41, 42) umfasst, anhand welcher der mechanische Steckverbinder (40) geeignet ist, mindestens teilweise in dem Inneren des Adapters (50) entlang einer Einfügerichtung (F) untergebracht zu sein,
- wobei ein Ende (41A-B, 42A-B) mindestens einer zylindrischen Ausstülpung (41, 42) mindestens einen Abschnitt (41A, 42A), der bezüglich der Einfügerichtung (F) geneigt ist, aufweist, und
- mindestens eine Seitenwand (54), die einen Hohlraum (54B) aufweist, der eine interne Oberfläche (54C) umfasst, die zunehmend von einem Ende der Seitenwand (54) bis zu der entsprechenden seitlichen Öffnung (54A, 55A) geneigt ist, Anordnung **dadurch gekennzeichnet, dass** der Hohlraum (54B) seitliche Abgrenzungen (54D, 54E) umfasst, die bezüglich der Ebene, die von der Achse der entsprechenden seitlichen Öffnung (54A, 55A) und der Einfügerichtung (F) abnehmend von dem Ende der Seitenwand (54) bis zu der entsprechenden seitlichen Öffnung (54A, 55A) geneigt sind.

2. Anordnung nach Anspruch 1, wobei die seitlichen Öffnungen (54A, 55A) des Adapters (50) einander gegenüber entlang einer gemeinsamen Achse (Y-Y') angeordnet sind.

3. Anordnung nach Anspruch 2, wobei die zylindrischen Ausstülpungen (41, 42) des mechanischen Steckverbinders (40) einander gegenüber entlang einer gemeinsamen Achse (Z-Z'), die zu der gemeinsamen Achse (Y-Y') der seitlichen Öffnungen (54A, 55A) des Adapters (50) parallel sind, angeordnet sind.

4. Anordnung nach einem der Ansprüche 1 bis 3, wobei die zylindrischen Ausstülpungen (41, 42) des mechanischen Steckverbinders (40) und die seitlichen Öffnungen (54A, 55A) des Adapters (50) jeweils einen kreisförmigen Querschnitt aufweisen.

5. Anordnung nach einem der vorstehenden Ansprüche, wobei die innere geneigte Oberfläche (54C) des Hohlraums (54B), der in jeder Seitenwand (54A, 55A) eingerichtet ist, sowie seitliche Abgrenzungen (54D, 54E) des Hohlraums (54B) zu einer Ebene symmetrisch sind, die durch die Achse der entsprechenden seitlichen Öffnung (54A) und der Einfügerichtung (F) der zylindrischen Ausstülpungen (41, 42) durchgeht.

6. Anordnung nach einem der vorstehenden Ansprüche, wobei die mechanische Steckverbindung (40) einen zentralen Teil (45) umfasst, von dem zwei zylindrische Ausstülpungen (41, 42) münden, wobei eine zylindrische Schulter (57) zwischen den zentralen Teil (45) und jeder zylindrische Ausstülpung (41, 42) eingefügt ist.

7. Anordnung nach einem der vorstehenden Ansprüche, wobei der verformbare Charakter mindestens einer Seitenwand (54, 55) aus mindestens einer Nut (58) resultiert, die in der Stärke der Seitenwand (54, 55) eingerichtet ist.

8. Anordnung nach einem der vorstehenden Ansprüche, wobei der Adapter (50) mindestens zwei Verriegelungselemente (51, 52) umfasst, die jeweils aus einem versenkbaren Knopf (51A, 52A) bestehen, der an einem Ende einer biegsamen Lasche (51B, 52B) eingerichtet ist, um den Adapter (50) bezüglich des Endteils (20) zu verriegeln, wobei die Laschen (51B, 52B) derart eingerichtet sind, dass sie sich bei der Handhabung der versenkbaren Knöpfe (51A, 52A) kreuzen.

9. Scheibenwischanlage (1), die ein Blatt (30), einen Blattträger (10), der sich an seinem äußeren Ende durch ein Endteil (20) verlängert, sowie eine Anordnung (40, 50) umfasst, die einen mechanischen Steckverbinder (40) umfasst, der mit dem Blatt (30) fest verbunden ist, und einen Adapter (50), der geeignet ist, mit dem Endteil (20) und dem mechanischen Steckverbinder (40) verbunden zu sein, wobei der Adapter (50) zwei verformbare Seitenwände (54, 55) umfasst, die jeweils eine seitliche Öffnung (54A, 55A) aufweisen, wobei der mechanische Steckverbinder (40) zwei zylindrische Ausstülpungen (41, 42) umfasst, anhand welcher der mechanische Steckverbinder (40) geeignet ist, mindestens teilweise in dem Inneren des Adapters (50) aufgenommen zu sein, wobei jede zylindrische Ausstülpung (41, 42) geeignet ist, in die entsprechende seitliche Öffnung (54A, 55A) entlang einer vorbestimmten Einfügerichtung (F) durch Verformen der entsprechenden Seitenwand (54, 55) eingefügt zu werden,
- wobei das Ende (41A-B, 42A-B) jeder zylindrischen Ausstülpung (41, 42) mindestens einen Abschnitt (41A, 42A), der bezüglich der Einfügerichtung (F) zum Inneren des Adapters (50) geneigt ist, aufweist, und
- der Abschnitt (54B) jeder Seitenwand (54), auf den sich die entsprechende zylindrische Ausstülpung (41) stützen soll, wenn sie in die entsprechende seitliche Öffnung (54A) eingefügt wird, einen Hohlraum (54B) aufweist, von dem mindestens eine interne Oberfläche (54C) zunehmend von dem Ende der Seitenwand (54) bis zu der entsprechenden seitlichen Öffnung (54A) geneigt ist, **dadurch gekennzeichnet, dass** mindestens eine seitliche Abgrenzung (54D, 54E) bezüglich der Ebene, die von der Achse der entsprechenden seitlichen Öffnung (54A) und der Einfügerichtung (F) gebildet wird, abnehmend von dem Ende der Seitenwand (54) bis zu der entsprechenden seitlichen Öffnung (54A) geneigt ist.

## Claims

1. Assembly (40, 50) for a wiping system (1), said wiping system (1) comprising a blade (30) and an arm (10) which is extended by an end piece (20), said assembly (40, 50) comprising a mechanical connector (40) integral with said blade (30), and an adapter (50) able to be connected to said end piece (20) and to said mechanical connector (40), said adapter (50) comprising two deformable side walls (54, 55) each with a lateral orifice (54A, 55A), said mechanical connector (40) comprising two cylindrical protuberances (41, 42) via which said mechanical connector (40) is able to be housed at least partly inside said adapter (50) along an insertion direction (F),
- the end (41A-B, 42A-B) of at least one cylindrical protuberance (41, 42) having at least one portion (41A, 42A) which is inclined in relation to said insertion direction (F), and in that
- at least one side wall (54) having a cavity (54B) comprising an inner surface (54C) which is inclined in increasing fashion from an end of said side wall (54) up to said corresponding lateral orifice (54A, 55A), said assembly being **characterized in that** the cavity (54B) comprises lateral delimitations (54D, 54E) which are inclined in relation to the plane formed by the axis of said corresponding lateral orifice (54A, 55A) and said insertion direction (F), in a decreasing fashion from the end of said side wall (54) up to said corresponding lateral orifice (54A, 55A).

2. Assembly according to Claim 1, wherein the lateral orifices (54A, 55A) of the adapter (50) are arranged facing each other on a common axis (Y-Y').

3. Assembly according to Claim 2, wherein the cylindrical protuberances (41, 42) of the mechanical connector (40) are arranged facing each other on a common axis (Z-Z'), which lies parallel to the common axis (Y-Y') of the lateral orifices (54A, 55A) of the adapter (50).

4. Assembly according to any of Claims 1 to 3, wherein the cylindrical protuberances (41, 42) of the mechanical connector (40) and the lateral orifices (54A, 55A) of the adapter (50) each have a circular cross-section.

5. Assembly according to any of the preceding claims, wherein the inner inclined surface (54C) of the cavity (54B) provided in each side wall (54A, 55A) and the lateral delimitations (54D, 54E) of said cavity (54B) are symmetrical in relation to a plane passing through the axis of the corresponding lateral orifice (54A) and the insertion direction (F) of said cylindrical protuberances (41, 42).

6. Assembly according to any of the preceding claims, wherein the mechanical connector (40) comprises a central part (45) from which two cylindrical protuberances (41, 42) protrude, a cylindrical shoulder (57) being interposed between the central part (45) and each cylindrical protuberance (41, 42) .

7. Assembly according to any of the preceding claims, wherein the deformable nature of at least one side wall (54, 55) results from at least one groove (58) provided in the thickness of the side wall (54, 55).

8. Assembly according to any of the preceding claims, wherein the adapter (50) comprises at least two locking elements (51, 52), each consisting of a telescopic button (51A, 52A) arranged at one end of a flexible tab (51B, 52B), to lock the adapter (50) in relation to the end piece (20), said tabs (51B, 52B) being arranged so as to overlap on operation of the telescopic buttons (51A, 52A).

9. Wiping system (1) comprising a blade (30), an arm (10) extended at its outer end by an end piece (20), and an assembly (40, 50) comprising a mechanical connector (40) integral with said blade (30), and an adapter (50) able to be connected to said end piece (20) and to said mechanical connector (40), said adapter (50) comprising two deformable side walls (54, 55) each with a lateral orifice (54A, 55A), said mechanical connector (40) comprising two cylindrical protuberances (41, 42) via which said mechanical connector (40) is able to be housed at least partly inside said adapter (50), each cylindrical protuberance (41, 42) being able to be inserted in the corresponding lateral orifice (54A, 55A) along a predefined insertion direction (F) by deformation of the corresponding side wall (54, 55),
- the end (41A-B, 42A-B) of each cylindrical protuberance (41, 42) having at least one portion (41A, 42A) which is inclined in relation to said insertion direction (F), towards the inside of said adapter (50), and
- the portion (54B) of each side wall (54), on which the corresponding cylindrical protuberance (41) is intended to rest when inserted in the corresponding lateral orifice (54A), having a cavity (54B), at least one inner surface (54C) of which is inclined in an increasing fashion from the end of said side wall (54) up to said corresponding lateral orifice (54A), **characterized in that**
- at least one lateral delimitation (54D, 54E) is inclined in relation to the plane formed by the axis of said corresponding lateral orifice (54A) and said insertion direction (F), in decreasing fashion from the end of said side wall (54) up to said corresponding lateral orifice (54A).
